# EUROPÄISCHE PATENTSCHRIFT

(11) **EP 3 049 269 B1**
(45) Veröffentlichungstag und Bekanntmachung des Hinweises auf die Patenterteilung: **06.11.2019**
(21) Anmeldenummer: 14771196.4
(22) Anmeldetag: 09.09.2014
(51) Int. Cl.: B60K 6/46, B60W 10/06, B60W 10/08, B60W 10/30, B60W 20/00, B60W 10/184, B60W 10/196, B60W 30/18, E02F 9/20

(54) **SELBSTFAHRENDE ARBEITSMASCHINE SOWIE VERFAHREN ZUM ABBREMSEN EINER SOLCHEN ARBEITSMASCHINE**
SELF-PROPELLED WORKING MACHINE AND METHOD FOR BRAKING A WORKING MACHINE OF THIS TYPE
ENGIN DE TRAVAIL AUTOMOTEUR ET PROCÉDÉ DE FREINAGE D'UN TEL ENGIN DE TRAVAIL

(30) Priorität: 27.09.2013 DE 102013016126; 11.10.2013 DE 102013016915; 19.12.2013 DE 102013021607
(43) Veröffentlichungstag der Anmeldung: 03.08.2016
(73) Patentinhaber: Liebherr-Components Biberach GmbH, 88400 Biberach/Riß (DE)
(72) Erfinder: MERKLE, Markus, 89597 Munderkingen (DE); RESCH, Jürgen, 88456 Ingoldingen-Degernau (DE); HOFFMANN, Sebastien, Nicolas, F-68000 Colmar (FR); RICHTHAMMER, Dr. Burkhard, Emanuel, 79102 Freiburg (DE); SOMMER, Bernd, 88400 Biberach (DE); DUELLI, Stefan, 88426 Eberhardzell (DE)
(74) Vertreter: Thoma, Michael
(86) Internationale Anmeldenummer: PCT/EP2014/002436
(87) Internationale Veröffentlichungsnummer: WO 2015/043714

(56) Entgegenhaltungen:
- WO-A1-2012/099255
- AT-U2- 12 010
- US-A1- 2005 137 060
- US-A1- 2008 298 977

## Beschreibung

Die vorliegende Erfindung betrifft eine selbstfahrende Arbeitsmaschine, vorzugsweise in Form eines Kettenfahrzeugs wie Planierraupe, mit einem Elektroantrieb umfassend zumindest einen Elektromotor, einen von einem Verbrennungsmotor antreibbaren Generator zum Versorgen des Elektroantriebs mit elektrischer Energie, zumindest einem mit dem Verbrennungsmotor verbundenen Hilfsaggregat sowie einer Bremsvorrichtung zum Abbremsen der Arbeitsmaschine, wobei die genannte Bremsvorrichtung ein generatorisches Bremsen durch den Elektroantrieb vorsieht und eine Rückspeisevorrichtung zum Rückspeisen von elektrischer Motorbremsleistung des Elektromotors an den Generator umfasst, um die Motorbremsleistung auf dem Verbrennungsmotor und dem damit verbundenen Hilfsaggregat abzustützen. Die Erfindung betrifft ferner auch ein Verfahren zum Abbremsen einer solchen Arbeitsmaschine.

Bei selbstfahrenden Arbeitsmaschinen wie Planierraupen oder anderen Kettenfahrzeugen oder auch anderen selbstfahrenden Offroad-Fahrzeugen für Baustellen, Minen und dergleichen werden in jüngerer Zeit Elektroantriebe mit zumindest einem Elektromotor verwendet, um die gegenüber hydrostatischen Antrieben typischen Vorteile solcher Elektroantriebe wie bspw. deren besseren Wirkungsgrad und eine leichtere Wartung zu nutzen. Durch den beträchtlich besseren Wirkungsgrad können bei den teilweise beachtlichen Leistungen auch deutlich niedrigere Betriebskosten erreicht werden. Der Elektroantrieb kann dabei insbesondere als Fahrantrieb genutzt werden, mittels dessen zumindest ein Kettenantrieb des Fahrwerks angetrieben wird, aber auch zum Antreiben eines Hauptarbeitsaggregats wie bspw. der Fräswalze eines Surface-Miners eingesetzt werden.

Zur Energieversorgung des Elektroantriebs kann dabei ein Generator vorgesehen sein, der von einem Verbrennungsmotor bspw. in Form eines Dieselmotors, eines Benzinmotors oder eines Gasmotors antreibbar ist, wobei von dem Verbrennungsmotor nicht nur der Stromgenerator, sondern auch ein Hydraulikaggregat, insbesondere dessen Pumpe angetrieben werden kann, um andere Stellaktoren von Hydraulikkomponenten hydraulisch antreiben zu können. Bei einer Planierraupe kann bspw. die Verstell- und/oder Hubvorrichtung für die Planierschaufel mittels solcher hydraulischer Aktoren angetrieben werden. Bei Muldenkippern kann die Kippmulde mittels eines Hydraulikaktors aufgewippt werden.

Eine Planierraupe mit einem solchen Antriebskonzept umfassend einen Elektroantrieb ist beispielsweise aus der Schrift US 7,950,481 bekannt, wobei hier vorgeschlagen wird, einen Elektromotor zentral anzuordnen und dessen Antriebsleistung über ein Differenzial auf verschiedene anzutreibende Elemente zu geben. Dabei wird vorgeschlagen, überschüssige elektrische Energie, die vom Generator bei nicht ausgelastetem Verbrennungsmotor erzeugt wird, in eine Batterie zu speichern, um aus der Batterie im Sinne einer Boost-Funktion zusätzliche elektrische Energie auf den Elektromotor geben zu können, wenn dieser eine besonders hohe Leistung benötigt, was beispielsweise beim Anfahren der Maschine der Fall sein kann. Ist umgekehrt die Arbeitsmaschine abzubremsen, werden mechanische Bremsen in Form von federvorgespannten, hydraulisch lüftbaren Scheibenbremsen betätigt. Je nach Größe der Arbeitsmaschine und Einsatzzweck müssen solche Bremsen mehr oder minder groß dimensioniert werden, um bei intensiven Bremsvorgängen über längere Zeit nicht zu überhitzen bzw. zu überlasten, wie dies bspw. bei ständig vor- und zurückfahrenden Planierraupen oder bei vollbeladenen, talwärts fahrenden Muldenkippern der Fall sein kann.

Ferner beschreibt die Schrift US 8,395,335 B2 ein elektrisches Antriebssystem für Offroad-Trucks, bei dem die elektrische Antriebsenergie von einem Verbrennungsmotor bereitgestellt wird, der einen Generator antreibt. Im Bremsbetrieb wird von den Elektromotoren bereitgestellte, elektrische Motorbremsleistung auf den Generator gegeben, um den Kraftstoffverbrauch des Verbrennungsmotors zu reduzieren. Überschüssige elektrische Motorbremsleistung wird darüber hinaus am Verbrennungsmotor vorbei auf elektrische Hilfsaggregate gegeben, um diese Hilfsaggregate elektrisch anzutreiben, und schließlich über elektrische Bremswiderstände in Form einer sog. Grid Box dissipativ abgebaut bzw. "verbrannt", d.h. in Wärme umgewandelt. Die Verteilung der elektrischen Motorbremsleistung erfordert jedoch ein relativ kompliziertes Steuerungssystem unter Berücksichtigung der an den Hilfsaggregaten verwendbaren elektrischen Energie. Zudem muss die an der genannten Grid Box entstehende Wärmebelastung berücksichtigt werden.

Aus der Schrift US 2005/0137060 A1 ist es ferner bekannt, die Motorbremsleistung eines elektrischen Fahrantriebs vorrangig an einen Generator rückzuspeisen und damit auf dem mit dem Generator verbundenen Verbrennungsmotor abzustützen. Bei Erreichen einer vorbestimmten Drehzahl des Verbrennungsmotors wird eine dann immer noch überschießende Motorbremsleistung des Elektromotors zunächst in einen Speicher abgezweigt und/oder zum Antreiben elektrischer Hilfsaggregate abgezweigt, und sodann in einer weiteren Stufe über Bremswiderstände dissipativ abgebaut. Die Rückspeisevorrichtung ist hierzu mehrsträngig mit Verzweigungen zum Energiespeicher und zu elektrischen Hilfsaggregaten ausgebildet und mit Bremswiderständen versehen.

Aus der EP 26 66 692 A1 ist eine umgekehrte Bremsstrategie bekannt, bei der Motorbremsleistung eines als Fahrantrieb dienenden Elektromotors vorrangig zum Laden eines Energiespeichers verwendet wird und erst dann, wenn die Motorbremsleistung die Ladekapazität übersteigt, zum Hochdrehen eines Verbrennungsmotors verwendet wird, wobei vor Erreichen einer Maximaldrehzahl des Verbrennungsmotors auch noch eine Hydraulikpumpe auf einen höheren hydraulischen Widerstand gefahren wird.

Der vorliegenden Erfindung liegt die Aufgabe zugrunde, eine verbesserte Arbeitsmaschine der eingangs genannten Art sowie ein verbessertes Verfahren zum Abbremsen einer solchen Arbeitsmaschine zu schaffen, die Nachteile des Standes der Technik vermeiden und Letzteren in vorteilhafter Weise weiterbilden. Vorzugsweise soll mit einer einfach aufgebauten, leicht zu steuernden Bremsvorrichtung ein energieeffizientes Abbremsen mit ausreichenden Verzögerungen ermöglicht werden.

Die genannte Aufgabe wird durch eine Arbeitsmaschine gemäß Anspruch 1 sowie ein Verfahren zum Abbremsen einer solchen Arbeitsmaschine gemäß Anspruch 11 gelöst. Bevorzugte Ausgestaltungen der Erfindung sind Gegenstand der abhängigen Ansprüche.

Es wird also vorgeschlagen, die auf dem Verbrennungsmotor abstützbare Bremsleistung durch Verändern der Leistungsaufnahme zumindest eines Hilfsaggregats zu steuern, das an den Verbrennungsmotor angebunden ist, beispielsweise in Form eines Lüfters, einer Kühlvorrichtung oder einer Pumpe. Erfindungsgemäß ist eine Steuervorrichtung zum automatischen Erhöhen und/oder Erniedrigen der Leistungsaufnahme des zumindest einen Hilfsaggregats in Abhängigkeit der auf den Verbrennungsmotor rückgespeisten, elektrischen Motorbremsleistung und/oder des Betriebszustands des mit rückgespeister Motorbremsleistung beaufschlagten Verbrennungsmotors vorgesehen. Die elektrische Motorbremsleistung kann dabei direkt durch Bestimmen einer in der Rückspeisevorrichtung auftretenden elektrischen Kenngröße wie Spannung oder Strom gemessen bzw. bestimmt werden, beispielsweise über einen Umrichter, oder auch indirekt über eine mit der Motorbremsleistung einhergehende Kenngröße bestimmt werden, beispielsweise ein Drehmoment, das der Generator unter Beaufschlagung mit der rückgespeisten Motorbremsleistung erzeugt. Die Leistungsaufnahme des Hilfsaggregats kann aber nicht nur in Abhängigkeit der Motorbremsleistung selbst, sondern auch in Abhängigkeit der Betriebszustands des mit der rückgespeisten Motorbremsleistung beaufschlagten Verbrennungsmotors und/oder des damit verbundenen Hilfsaggregats gesteuert werden, beispielsweise in Abhängigkeit einer Drehzahl des Verbrennungsmotors.

Hierdurch kann nicht nur die generatorische Motorbremsleistung und damit auch die gesamte Bremsleistung vergrößert und variabler gesteuert werden und der Verschleiß einer ggf. zusätzlich vorhandenen mechanischen Bremse hinausgezögert werden, sondern es kann vor allen Dingen auch ein nochmals effizienterer Betrieb der Arbeitsmaschine erreicht werden, beispielsweise dadurch, dass ein Lüfter oder eine Kühlvorrichtung bei Bergabfahrt über das an sich notwendig Maß hinaus leistungsmäßig hochgefahren wird, um entsprechende Aggregate stärker als zwingend erforderlich herabzukühlen, so dass dann bei nachfolgender Bergfahrt oder auch auf ebener Strecke das Hilfsaggregat länger ausgeschaltet oder bei niedrigerer Leistung als sonst betrieben werden kann.

Gemäß der Erfindung ist es vorgesehen, zur Erhöhung der generatorischen Motorbremsleistung ein Hilfsaggregat in Form einer Pumpe dissipativ bei höherer Leistungsaufnahme zu betreiben, beispielsweise durch Erhöhen der Förderleistung der Pumpe beispielsweise durch Zuschalten eines Strömungswiderstands.

Dabei wird als Hilfsaggregat, mit Hilfe dessen die Verzögerungskapazität des Retardsystems umfassend den Verbrennungsmotor und das Hilfsaggregat variabel gesteuert werden kann, eine Hydraulikpumpe verwendet, die für den Fahrbetrieb nicht benötigt wird und beim Fahren entweder drucklos im Umlauf fördert oder auf Fördermenge null geschwenkt ist. Um im Bremsbetrieb die Verzögerungskapazität des genannten Retardsystems zu erhöhen, kann vorteilhafterweise die Leistungsaufnahme der beim Fahren drucklos im Umlauf fördernden Hydraulikpumpe dadurch erhöht werden, dass ein Strömungswiderstand im Umlauf sukzessive vergrößert wird. Hierzu kann beispielsweise ein vorsteuerbares Druckbegrenzungsventil verwendet werden, das von der Steuervorrichtung entsprechend angesteuert wird, wenn eine höhere Retardleistung und damit ein höherer Strömungswiderstand benötigt wird.

Ist die als Hilfsaggregat verwendete Hydraulikpumpe beim Fahren auf Fördermenge null geschwenkt, kann die Leistungsaufnahme der Hydraulikpumpe vorteilhafterweise dadurch erhöht werden, dass die Hydraulikpumpe gegen einen vorzugsweise konstanten Strömungswiderstand im Umlauf sukzessive ausgeschwenkt wird, und zwar vorzugsweise gegen ein fest eingestelltes Druckbegrenzungsventil.

Eine solche im Fahrbetrieb nicht benötigte Hydraulikpumpe ist bei einer Planierraupe beispielsweise die Hydraulikpumpe für den Druckkreis, mittels dessen der Planierschild verstellt werden kann.

Zusätzlich zu einer solchen Hydraulikpumpe kann als Hilfsaggregat, dessen Leistungsaufnahme verstellt wird, auch eine Kühlvorrichtung, beispielsweise ein Kühllüfter verwendet werden, der bei höherer benötigter Bremsleistung hochgefahren und bei weniger benötigter Bremsleistung heruntergefahren werden kann.

Insbesondere kann die Steuervorrichtung die Leistungsaufnahme zumindest eines solchen Hilfsaggregats erhöhen, bevor eine ggf. vorhandene mechanische Bremse verwendet wird und/oder weitere Motorbremsleistung des zumindest einen Elektromotors dissipativ abgebaut, d.h. verbrannt wird, bspw. über einen Bremswiderstand.

Die Steuervorrichtung sieht dabei vor, die gewünschte Bremswirkung vorrangig durch generatorisches Bremsen über den/die Elektromotor/en zu erzielen und die hierbei erzeugte elektrische Motorbremsleistung auf dem Verbrennungsmotor und den damit verbundenen Hilfsaggregaten abzustützen, bis die Verzögerungskapazität des Verbrennungsmotors und des/der Hilfsaggregats/e im Wesentlichen vollständig ausgeschöpft ist.

Vorteilhafterweise wird im Schubbetrieb die Bremsenergie bzw. die von dem zumindest einen Elektromotor bereitgestellte elektrische Motorbremsleistung vorrangig über den Generator, der die elektrische Motorbremsleistung in mechanische Antriebsleistung für den Verbrennungsmotor umwandelt, auf den Verbrennungsmotor zurückgespeist und dort zum Antreiben der mit dem Verbrennungsmotor verbundenen Nebenverbraucher wie Lüfter, Kühler oder Pumpen sowie zum Überwinden der Schleppwiderstände des Verbrennungsmotors verwendet.

Übersteigt die auf dem Verbrennungsmotor und den daran angebundenen Hilfsaggregaten abgestützte Motorbremsleistung auch nach Hochfahren der Leistungsaufnahme der Hilfsaggregate noch ein für den Verbrennungsmotor und die Hilfsaggregate verträgliches Maß und/oder erreicht der Verbrennungsmotor und/oder das zumindest eine Hilfsaggregat unter Einwirkung der rückgespeisten Motorbremsleistung einen vorbestimmten Betriebszustand, kann automatisch eine mechanische Bremse zugeschaltet oder elektrische Energie auf den Bremswiderstand gegeben werden, um eine weitere Erhöhung der auf dem Verbrennungsmotor abgestützten, elektrischen Motorbremsleistung zu vermeiden bzw. zu verringern. Das Zuschalten des Bremswiderstands und/oder der mechanischen Bremse kann dabei vorteilhafterweise sanft mit - soweit erforderlich - sukzessive zunehmender Bremskraft erfolgen, so dass der Übergang von einem Bremsen ohne mechanische Bremse zu einem Bremsen mit mechanischer Bremse und umgekehrt nach Art eines Blending-Vorgangs in weich übergehender Weise ohne Verzögerungsstoß erfolgt. Die Bremskraft der mechanischen Bremse, aber auch die Bremsleistung, die auf dem zumindest einen Hilfsaggregat abgestützt wird, kann unter Berücksichtigung der bereits auf dem Verbrennungsmotor abgestützten Bremsleistung sanft variiert und gesteuert, insbesondere geregelt werden, um einem vom Fahrer vorgebbaren Bremskraftwunsch möglichst nahe zu kommen.

Der elektrische Bremswiderstand kann hierbei vorteilhafterweise nur kurzzeitig zum Abbau von Bremsleistungsspitzen eingesetzt werden, beispielsweise nur einige Sekunden, um im Spannungskreis auftretende Spannungsspitzen abzubauen. Im Dauerbetrieb kann das System vorteilhafterweise ohne den genannten Bremswiderstand arbeiten.

Vorteilhafterweise wird mit der mechanischen Bremse nachrangig erst dann gebremst, wenn die auf den Verbrennungsmotor rückgespeiste Motorbremsleistung die Verzögerungskapazität des Verbrennungsmotors und ggf. daran angebundener Hilfsaggregate erreicht.

Insbesondere kann bei zunehmender gewünschter oder benötigter Bremsleistung - beispielsweise durch zunehmendes Betätigen eines Bremsgebers und/oder zunehmendes Gefälle - zunächst eine steigende elektrische Motorbremsleistung, die von dem zumindest einen Elektromotor erzeugt wird, auf dem Verbrennungsmotor abgestützt werden, wobei sukzessive die Kraftstoffzufuhr an den Verbrennungsmotor reduziert wird, bis der Verbrennungsmotor bei konstanter Drehzahl keinen Kraftstoff mehr verbraucht. Vorteilhafterweise kann bei weiter zunehmender rückgespeister elektrischer Motorbremsleistung der Verbrennungsmotor über eine an sich gewünschte konstante Motordrehzahl hinaus hochgedreht werden, bis eine maximal zulässige oder maximal gewünschte Motordrehzahl des Verbrennungsmotors erreicht wird, wobei vorteilhafterweise das genannte Hochdrehen des Verbrennungsmotors unter abgesperrter Kraftstoffzufuhr erfolgt.

Wird die vorbestimmte maximale Drehzahl des Verbrennungsmotors erreicht, beginnt die Steuervorrichtung, die Leistungsaufnahme des zumindest einen Hilfsaggregats hochzufahren, um weitere Motorbremsleistung auf dem Verbrennungsmotor und dem damit verbundenen Hilfsaggregat abstützen zu können. Das Hochfahren der Leistungsaufnahme des Hilfsaggregats erfolgt dabei vorteilhafterweise sanft im Sinne eines Blending-Vorganges, um einen weichen Anstieg der Bremsleistung sicherzustellen. Dabei wird die Größe eines Bremskraftwunsches berücksichtigt, d.h. die Leistungsaufnahme des Hilfsaggregats nur so weit hochgefahren, dass die bereitgestellte Verzögerungsleistung nicht größer ist als die gewünschte Verzögerungsleistung.

Die Steuervorrichtung sieht also vorteilhafterweise mehrere, nacheinander zuschaltbare Bremsstufen vor, um die gewünschte oder benötigte Bremsleistung abzufangen. Zunächst bzw. vorrangig wird elektromotorische Motorbremsleistung auf dem Verbrennungsmotor abgestützt, ohne die Leistungsaufnahme des Hilfsaggregats hochzufahren oder gar mechanische Bremsen zuzuschalten, um den Verbrennungsmotor energieeffizient mit möglichst reduzierter Kraftstoffzufuhr betreiben zu können. Erst bei Erreichen einer Verzögerungskapazität des Verbrennungsmotors bzw. Erreichen der Verträglichkeitsgrenze der Abstützung der elektrischen Motorbremsleistung auf dem Verbrennungsmotor wird die Leistungsaufnahme des Hilfsaggregats in einer weiteren Stufe hochgefahren. Innerhalb der vorgenannten ersten Bremsstufe, in der die elektrische Motorbremsleistung ausschließlich bzw. zumindest vorwiegend auf dem Verbrennungsmotor abgestützt wird, wird dabei zunächst in einer ersten Unterstufe die Kraftstoffzufuhr bei im Wesentlichen konstanter Verbrennungsmotordrehzahl solange reduziert, bis die Kraftstoffzufuhr komplett abgeschaltet ist. Ist die Kraftstoffzufuhr abgesperrt, wird in einer zweiten Unterstufe ein Hochdrehen des Verbrennungsmotors zugelassen.

Die genannte Steuervorrichtung ist in Weiterbildung der Erfindung derart ausgebildet, dass die ggf. vorhandenen mechanischen Bremsen solange unbetätigt bzw. gelöst verbleiben, solange die gewünschte oder benötigte Bremsleistung über elektromotorisches Bremsen und Rückspeisen der Motorbremsleistung auf dem Verbrennungsmotor und der daran angebundenen Hilfsaggregate abgestützt werden kann, insbesondere solange die rückgespeiste Motorbremsleistung einen vorbestimmten Grenzwert nicht überschreitet und/oder der mit der rückgespeisten Motorbremsleistung beaufschlagte Verbrennungsmotor und/oder das damit verbundene Hilfsaggregat einen vorbestimmten Betriebszustand bzw. Betriebszustandsbereich nicht verlässt, insbesondere eine vorbestimmte Motordrehzahl nicht überschreitet.

Insbesondere kann die Steuervorrichtung die mechanische Bremse in Abhängigkeit der Motordrehzahl des Verbrennungsmotors zuschalten, und zwar insbesondere erst dann, wenn die Drehzahl des Verbrennungsmotors eine vorbestimmte maximale Drehzahl erreicht und das zumindest eine Hilfsaggregat auf seine vorbestimmte maximale Leistungsaufnahme gefahren ist. Die genannte Steuervorrichtung kann hierzu mit Drehzahlerfassungsmitteln, die die genannte Drehzahl des Verbrennungsmotors bereitstellen, und mit Bestimmungsmitteln zum Bestimmen des Betriebszustands und/oder der Leistungsaufnahme des zumindest einen Hilfsaggregats verbunden sein.

Ferner kann die genannte Steuervorrichtung Motorsteuermittel zum Reduzieren der Kraftstoffzufuhr an den Verbrennungsmotor umfassen, die zunächst die Kraftstoffzufuhr bei konstanter Drehzahl des Verbrennungsmotors reduzieren, insbesondere in zunehmendem Maße reduzieren derart, dass bei zunehmender Abstützung von elektrischer Motorbremsleistung auf dem Verbrennungsmotor die Kraftstoffzufuhr sukzessive gegen Null gefahren wird und dabei die Motordrehzahl konstant und/oder zumindest auf einer vorbestimmten minimalen Drehzahl, beispielsweise der Leerlaufdrehzahl gehalten wird.

Die genannte Steuervorrichtung kann grundsätzlich in verschiedener Weise realisiert sein, beispielsweise in Form von Software, die von einem zentralen Steuerrechner ausgeführt wird, oder in Form mehrerer Softwarebausteinen, die in separaten Rechenbausteinen ausgeführt wird, oder allgemein in Form eines oder mehrerer separater oder vernetzter Steuerungsbausteinen.

Die vorliegende Erfindung wird nachfolgend anhand eines bevorzugten Ausführungsbeispiels und zugehöriger Zeichnungen näher erläutert. In den Zeichnungen zeigen:

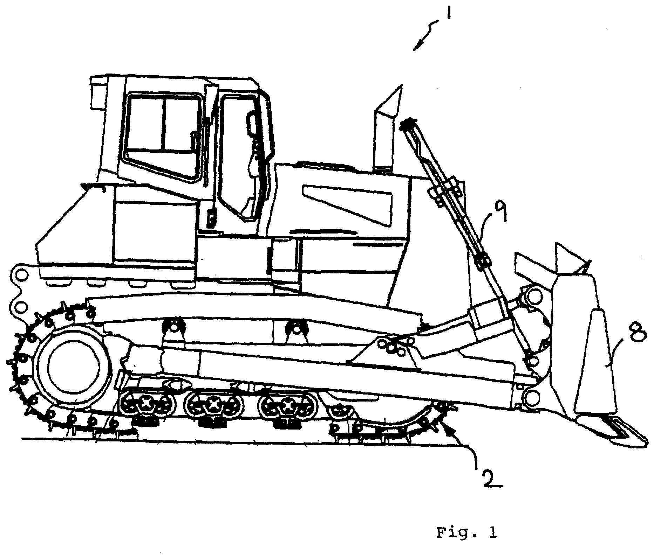

- Fig. 1:: eine schematische Seitenansicht einer selbstfahrenden Arbeitsmaschine, die nach einer vorteilhaften Ausführung der Erfindung als Planierraupe ausgebildet sein kann und als Fahrantrieb einen Elektroantrieb umfasst, der von einem Generator mit Strom versorgt wird, der von einem Verbrennungsmotor, bspw. in Form eines Dieselmotors antreibbar ist,

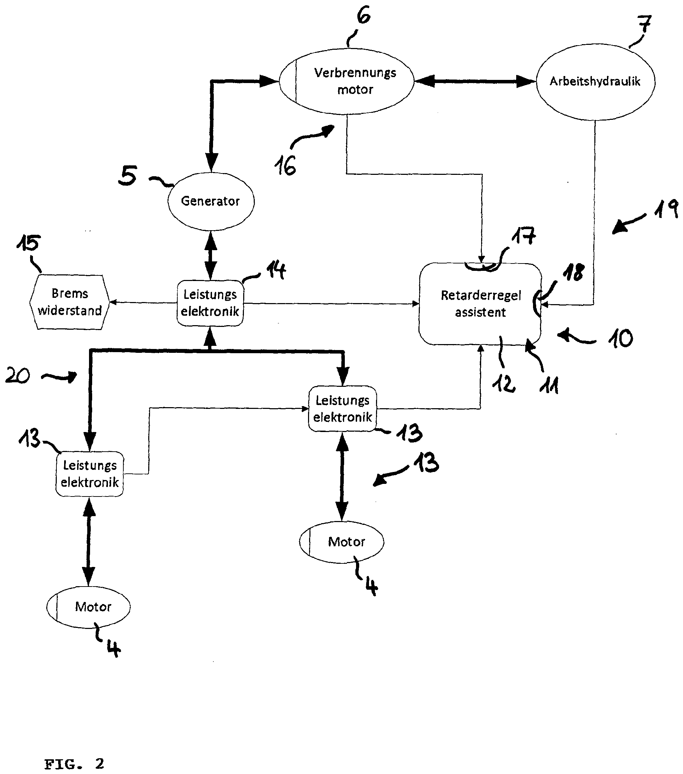

- Fig. 2:: eine schematische Darstellung der Komponenten des Antriebssystems der Arbeitsmaschine aus Fig. 1 und einer Steuervorrichtung umfassend einen Retardregelassistenten, der die beim Abbremsen der Arbeitsmaschine erzeugte elektrische Motorbremsleistung auf verschiedene Bausteine des Antriebsstranges verteilt und diese ansteuert, und

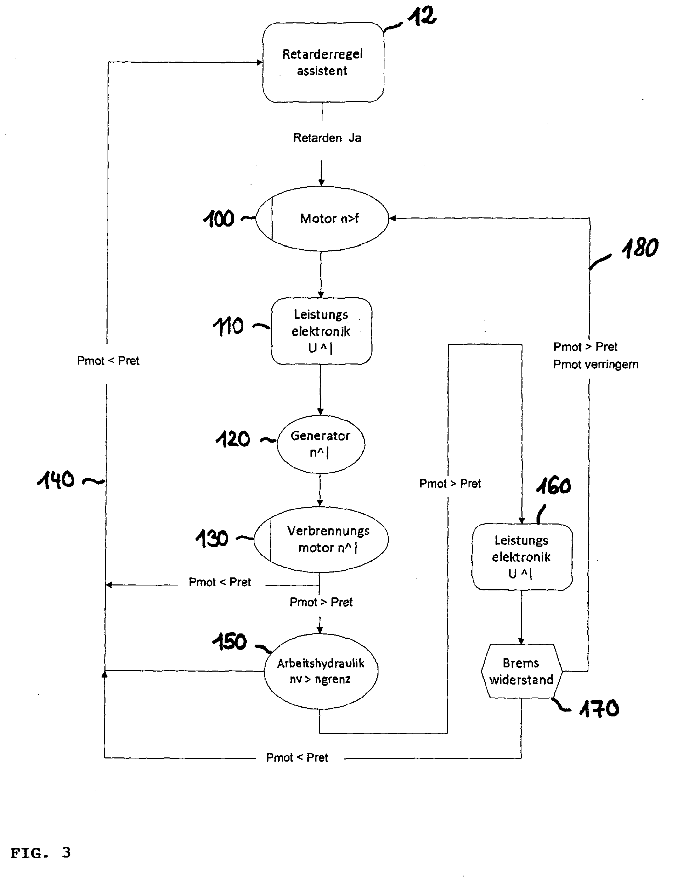

- Fig. 3:: ein Ablaufdiagramm zur Darstellung der beim Abbremsen der Arbeitsmaschine aus den vorhergehenden Figuren ausgeführten Verfahrensschritte.

Wie Fig. 1 zeigt, kann die selbstfahrende Arbeitsmaschine 1 bspw. als Planierraupe ausgebildet sein und als Fahrwerk 2 ein Kettenfahrwerk umfassen. Es versteht sich jedoch, dass die Arbeitsmaschine auch in anderer Form ausgebildet sein kann, bspw. als Bau- oder Abbaumaschine mit einem Radfahrwerk, bspw. in Form eines Muldenkippers oder Trucks.

Die Antriebssysteme der Arbeitsmaschine 1 umfassen zumindest einen Elektroantrieb 3 mit zumindest einem Elektromotor 4, der als Fahrantrieb dienen und den Kettentrieb oder der Planierraupe aus Fig. 1 oder ein Rad des Fahrwerks antreiben kann. Wie Fig. 2 zeigt, können auch mehrere Elektromotoren 4 vorgesehen sein, bspw. als Einzelradantrieb oder zum Antreiben mehrerer Achsen.

Wie Fig. 2 zeigt, wird der Elektroantrieb 3 von einem Generator 5 her mit elektrischem Strom versorgt, wobei der genannte Generator 5 von einem Verbrennungsmotor 6 angetrieben wird, der bspw. als Dieselmotor ausgebildet sein kann.

Weiterhin kann die Arbeitsmaschine 1 zumindest ein Hydraulikaggregat 7 umfassen, das bei Ausbildung der Arbeitsmaschine 1 in Form einer Planierraupe bspw. zum Verstellen des Planierschilds 8 dienen und hierzu zumindest einen Hydraulikaktor 9 bspw. in Form eines Hydraulikzylinders umfassen kann, vgl. Fig. 1.

Das Hydraulikaggregat 7 kann dabei eine vom genannten Verbrennungsmotor 6 her betätigbare Druckquelle bspw. in Form einer Hydraulikpumpe umfassen, um die Arbeitshydraulik mit Hydraulikfluid und -druck zu versorgen.

Alternativ oder zusätzlich zu dem genannten Hydraulikaggregat 7 kann die Arbeitsmaschine 1 auch weitere Hilfsaggregate wie beispielsweise eine Kühlvorrichtung oder einen Kühllüfter umfassen, der in der Zeichnung nicht eigens dargestellt ist und ebenfalls an den Verbrennungsmotor 6 angebunden sein kann.

Eine Bremsvorrichtung 10 zum Abbremsen der Arbeitsmaschine 1 kann nicht näher dargestellte mechanische Bremsen zum Abbremsen des Kettentriebs oder des Radantriebs umfassen, die bspw. in Form von federvorgespannten, hydraulisch lüftbaren Bremsmitteln ausgebildet sein können.

Weiterhin umfasst die genannte Bremsvorrichtung 10 den Einsatz des zumindest einen Elektromotors 4 als Generator, um die gewünschte Bremsleistung zunächst im Wege generatorischen Bremsens durch den Elektroantrieb 3 bereitzustellen. Die hierbei von den Elektromotoren 4 bereitgestellte elektrische Motorbremsleistung wird durch eine Steuervorrichtung 11 gesteuert und verteilt, wobei die genannte Steuervorrichtung 11 einen Rückspeiseregler bzw. Retardregelassistenten 12 umfassen kann.

Wie Fig. 2 zeigt, kann dabei dem Elektroantrieb 3 bzw. jedem Elektromotor 4 eine Leistungselektronik 13 zugeordnet sein, mittels derer einerseits im Motorbetrieb die dem Elektromotor 4 zugeführte Leistung und umgekehrt im Retardbetrieb die rückgeführte Motorbremsleistung gesteuert werden kann. Dabei kann eine weitere Leistungselektronik 14 auch sozusagen übergeordnet zwischen dem Elektroantrieb 3 und dem Generator 5 vorgesehen und mit einem Bremswiderstand 15 verbunden sein, um ggf., falls nötig, rückgespeiste Motorbremsleistung auch dissipativ an diesem Bremswiderstand 15 abbauen zu können.

Der vorgenannte Retardregelassistent 12 ist mit den genannten Leistungselektroniken 14 verbunden, um die rückgespeiste Motorbremsleistung zu regeln. Weiterhin ist der genannte Retardregelassistent 12 mit dem Verbrennungsmotor 6 und dem Hydraulikaggregat 7 verbunden, um mittels einer geeigneten Sensorik deren Betriebszustände zu überwachen und umgekehrt über Ansteuerbausteine ggf. auch deren Arbeitsparameter bzw. Betriebsparameter zu beeinflussen. Insbesondere kann eine Überwachungssensorik 16 einen Drehzahlsensor zum Überwachen der Drehzahl des Verbrennungsmotors 6 sowie einen Drucksensor zum Überwachen des Hydraulikdrucks im Hydraulikaggregat 7 umfassen.

In Weiterbildung der Erfindung kann der genannte Retardregelassistent 12 Motorsteuermittel 17 zum Ansteuern des Verbrennungsmotors 6, insbesondere zum Reduzieren der Kraftstoffzufuhr umfassen und/oder Hydrauliksteuermittel 18 zum Ansteuern des Hydraulikaggregats 7, insbesondere zum Verändern der Leistungsaufnahme beispielsweise über Veränderung der Fördermenge und/oder des Förderdrucks der Pumpe des Hydraulikaggregats 7 besitzen, wie zuvor erläutert.

Wird von einem Maschinenführer eine gewisse Bremskraft gewünscht, bspw. durch Betätigen eines Bremspedals oder Bremshebels oder Betätigen einer Bremswunschtaste, kann der Retardregelassistent 12 das generatorische Motorbremsen steuern bzw. regeln, wie dies in Fig. 3 veranschaulicht ist.

Besteht ein Bremswunsch, prüft der Retardregelassistent 12 zunächst, ob der Verbrennungsmotor 6 bereits an seiner oberen Drehzahlgrenze läuft, vgl. Schritt 100 in Fig. 3. Ist dies nicht der Fall, d.h. wenn der Verbrennungsmotor 6 noch Retardleistung bereitstellen bzw. aufnehmen kann, steuert der Retardregelassistent 12 die Leistungselektronik 14 an, um generatorische Motorbremsleistung der Elektromotoren 4 zu erzeugen und auf den Generator 5 rückzuspeisen, vgl. Schritte 110 und 120 in Fig. 3. Dieses Rückspeisen der Motorbremsleistung auf den Generator 5 führt an sich zu einer Erhöhung der Drehzahl des Verbrennungsmotors 6, was zunächst vorteilhafterweise dadurch kompensiert bzw. reduziert oder begrenzt werden kann, dass die Kraftstoffzufuhr reduziert wird, was zu einem besonders effizienten Betrieb der Arbeitsmaschine führt. Die Kraftstoffzufuhr kann dabei von dem Retardregelassistenten vorteilhafterweise derart reduziert werden, dass zunächst keine Drehzahländerung des Verbrennungsmotors 6 eintritt, wobei die Reduzierung der Kraftstoffzufuhr schrittweise oder kontinuierlich vergrößert werden kann, bis ggf. gar kein Kraftstoff mehr zugeführt wird.

Ist eine solche Kompensierung durch Reduzierung der Kraftstoffzufuhr nicht mehr möglich, erhöht sich die Drehzahl des Verbrennungsmotors 6, was der Retardregelassistent 12 grundsätzlich zulässt, vgl. Schritt 130 in Fig. 3.

Ist die aufgrund des Bremskraftwunsches bereitzustellende Motorbremsleistung immer noch kleiner als die am Verbrennungsmotor 6 aufnehmbare Retardleistung, arbeitet die Rückspeiseregelung an sich in einer Schleife, vgl. den Zweig 140 im Ablaufdiagramm der Fig. 3. Der besagte Zweig 140 wird also dann beschritten, wenn Pₘₒₜ < Pᵣₑₜ ist, d.h. die Motorbremsleistung kleiner ist als die vom Verbrennungsmotor aufgebrachte Retardleistung.

Stellt die Überwachung der Drehzahl des Verbrennungsmotors 6 im Schritt 130 indes fest, dass der Verbrennungsmotor 6 an seiner oberen Drehzahlgrenze arbeitet, d.h. keine weitere Retardleistung mehr aufnehmen kann, prüft der Retardregelassistent im Schritt 150, ob weitere Motorbremsleistung im Hydraulikaggregat 7 abgestützt werden kann, bspw. indem auf das Fördervolumen oder den Förderdruck Einfluss genommen bzw. die Pumpe weiter ausgeschwenkt und/oder ein Drosselwiderstand erhöht wird. Kann hierüber die dem Bremskraftwunsch entsprechende Motorbremsleistung abgefangen werden, d.h. überschreitet die Motorbremsleistung nicht die vom Verbrennungsmotor 6 und der Arbeitshydraulik 7 bereitstellbaren Retardleistung, nimmt die Regelung wiederum den Zweig 140.

Ist andererseits auch die Retardleistung des Hydraulikaggregats 7 und ggf. vorhandener weiterer Hilfsaggregate wie Lüfter erreicht, steuert der Retardregelassistent 12 die Leistungselektronik 14 an, die mit dem Bremswiderstand 15 verbunden ist, um weitere Motorbremsleistung am genannten Bremswiderstand 15 dissipativ abzubauen, vgl. Schritte 160 und 170 in Fig. 3. Kann der genannte Bremswiderstand 15 die am Verbrennungsmotor 6 und dem Hydraulikaggregat 7 nicht mehr abstützbare Motorbremsleistung auffangen, geht die Regelung wiederum über den Schritt 140 zurück, da Pₘₒₜ < Pᵣₑₜ gilt, vgl. Schritt 140 in Fig. 3.

Übersteigt die Motorbremsleistung bzw. der über die Retardkapazität des Verbrennungsmotors 6 und des Hydraulikaggregats 7 überschießende Teil jedoch die Retardkapazität des besagten Bremswiderstandes 15, reduziert der Retardregelassistent 12 die Motorbremsleistung durch entsprechende Ansteuerung der Leistungselektronik 14, vgl. Schritt 180 in Fig. 3.

In diesem Falle kann der Bremskraftwunsch des Maschinenführers nicht mehr durch generatorisches Bremsen mittels des Elektroantriebs 3 erfüllt werden, so dass die Arbeitsmaschine 1 an sich langsamer bzw. weniger stark abgebremst werden würde als dies vom Maschinenführer gewünscht wird. Um hier Abhilfe zu schaffen, kann dann, wenn die maximale Retardleistung des Retardsystems erreicht ist, eine mechanische Bremse zugeschaltet werden, was vorteilhafterweise sanft mit zunehmend ansteigender Bremskraft erfolgen kann, um einem Bremskraftwunsch möglichst nahe zu kommen.

## Patentansprüche

1. Selbstfahrende Arbeitsmaschine, insbesondere Kettenfahrzeug wie Planierraupe, mit einem Elektroantrieb (3) umfassend zumindest einen Elektromotor (4), einem von einem Verbrennungsmotor (6) antreibbaren Generator (5) zum Versorgen des Elektroantriebs (3) mit elektrischer Energie, mindestens einem mit dem Verbrennungsmotor verbundenen Hilfsaggregat (7) in Form einer Hydraulikpumpe, welche für den Fahrbetrieb nicht benötigt wird und beim Fahren drucklos im Umlauf fördert oder auf Fördermenge Null geschwenkt ist, sowie einer Bremsvorrichtung (10) zum Abbremsen der Arbeitsmaschine, wobei die genannte Bremsvorrichtung (10) ein generatorisches Bremsen durch den Elektroantrieb (3) vorsieht und eine Rückspeisevorrichtung (20) zum Rückspeisen von elektrischer Motorbremsleistung des Elektromotors (4) an den Generator (5) umfasst, wobei die Motorbremsleistung des zumindest einen Elektromotors (4) zumindest bis zum Erreichen der Verzögerungskapazität des Verbrennungsmotors (6) und des zumindest einen Hilfsaggregates (7) vollständig auf den mit dem Verbrennungsmotor (6) verbundenen Generator (5) gegeben und die von dem Generator (5) erzeugte mechanische Antriebsleistung vollständig auf den Verbrennungsmotor (6) gegeben wird. **dadurch gekennzeichnet, dass** eine Steuervorrichtung (11) zum automatischen Erhöhen und/oder Erniedrigen der Leistungsaufnahme der Hydraulikpumpe in Abhängigkeit der auf den Verbrennungsmotor (6) rückgespeisten, elektrischen Motorbremsleistung und/oder des Betriebszustands des mit rückgespeister Motorbremsleistung beaufschlagten Verbrennungsmotors (6) vorgesehen ist, wobei die Steuervorrichtung (11) einen Regler zum Regeln der Leistungsaufnahme der Hydraulik derart, dass der Verbrennungsmotor (6).auf einer vorbestimmten Drehzahl gehalten wird oder der vorbestimmten Drehzahl möglichst nahe kommt, aufweist.

2. Selbstfahrende Arbeitsmaschine nach einem der vorhergehenden Ansprüche, wobei die Steuervorrichtung (11) eine erste Bremsstufe umfasst, in der das Abstützen der elektrischen Motorbremsleistung auf dem Verbrennungsmotor (6) derart erfolgt, dass in einer ersten Unterstufe zunächst die Kraftstoffzufuhr an den Verbrennungsmotor (6) bei im Wesentlichen gleichbleibender Motordrehzahl reduziert wird und in einer zweite Unterstufe bei abgeschalteter Kraftstoffzufuhr eine Drehzahlerhöhung des Verbrennungsmotors (6) zum Erhöhen der Bremsleistung zugelassen wird, bis eine vorbestimmte maximale Drehzahl erreicht wird.

3. Selbstfahrende Arbeitsmaschine nach einem der vorhergehenden Ansprüche, wobei die Steuervorrichtung (11) derart ausgebildet ist, dass beim generatorischen Bremsen die rückgespeiste Motorbremsleistung vorrangig auf dem Verbrennungsmotor (6) und erst nachrangig durch Erhöhen der Leistungsaufnahme des zumindest einen Hilfsaggregats (7) abgestützt wird dann, wenn die auf den Verbrennungsmotor (6) rückgespeiste Motorbremsleistung die Verzögerungskapazität des Verbrennungsmotors (6) erreicht.

4. Selbstfahrende Arbeitsmaschine nach einem der vorhergehenden Ansprüche, wobei die Steuervorrichtung (11) mit Drehzahlerfassungsmitteln (16) zum Erfassen einer Drehzahl des Verbrennungsmotors (6) verbindbar und derart ausgebildet ist, dass die Leistungsaufnahme des zumindest einen Hilfsaggregats (7) bei Überschreiten einer vorbestimmten Drehzahl des Verbrennungsmotors (6) erhöht und bei Unterschreiten der/einer vorbestimmten Drehzahl des Verbrennungsmotors (6) vermindert wird.

5. Selbstfahrende Arbeitsmaschine nach dem vorhergehenden Anspruch, wobei die Leistungsaufnahme der beim Fahren drucklos im Umlauf fördernden Hydraulikpumpe von der/einer Steuervorrichtung (11) dadurch erhöhbar ist, dass ein Strömungswiderstand im Umlauf sukzessive vergrößert wird, vorzugsweise durch ein vorsteuerbares Druckbegrenzungsventil.

6. Selbstfahrende Arbeitsmaschine nach Anspruch 7, wobei die Leistungsaufnahme der beim Fahren auf Fördermenge Null geschwenkten Hydraulikpumpe von der/einer Steuervorrichtung (11) dadurch erhöhbar ist, dass die Hydraulikpumpe gegen einen vorzugsweise konstanten Strömungswiderstand im Umlauf sukzessive ausgeschwenkt wird, vorzugsweise gegen ein fest eingestelltes Druckbegrenzungsventil.

7. Selbstfahrende Arbeitsmaschine nach einem der vorhergehenden Ansprüche, wobei die Steuervorrichtung (11) mit Motorsteuermitteln (32) zum Steuern der Kraftstoffzufuhr an den Verbrennungsmotor (6) verbindbar ist, wobei die genannten Motorsteuermittel (32) vorzugsweise derart ausgebildet sind, dass im Bremsbetrieb mit Rückspeisung von Motorbremsleistung auf den Verbrennungsmotor (6) die Kraftstoffzufuhr derart reduziert wird, dass der Verbrennungsmotor (6) auf im Wesentlichen konstanter Drehzahl gehalten wird.

8. Selbstfahrende Arbeitsmaschine nach einem der vorhergehenden Ansprüche, wobei die Rückspeisevorrichtung (20) zumindest einen dem zumindest einen Elektromotor (4) zugeordneten Motorumrichter (13) und zumindest einen dem Generator (5) zugeordneten Generatorumrichter (14) sowie zumindest einen zwischen dem Motorumrichter (13) und dem Generatorumrichter (14) vorgesehenen Zwischenkreis, insbesondere in Form eines Gleichspannungszwischenkreises, umfasst.

9. Selbstfahrende Arbeitsmaschine nach einem der vorhergehenden Ansprüche, wobei die Steuervorrichtung (11) derart ausgebildet ist, dass vorrangig das generatorische Bremsen und erst nachrangig ein Bremsen durch einen elektrischen Bremswiderstand (15) und/oder eine mechanische Bremse erfolgt dann, wenn die auf den Verbrennungsmotor (6) und das zumindest eine Hilfsaggregat (7) rückgespeiste Motorbremsleistung die Verzögerungskapazität des Verbrennungsmotors (6) und des zumindest einen daran angebundenen Hilfsaggregats erreicht, wobei die Steuervorrichtung (11) derart ausgebildet ist, dass vor Zuschalten der mechanischen Bremse die Kapazität des elektrischen Bremswiderstandes (15) ausgeschöpft wird, wobei die Steuervorrichtung (11) derart ausgebildet ist, dass der elektrische Bremswiderstand (15) nur kurzzeitig, vorzugsweise nur einige Sekunden, zum Abbau von Bremsleistungsspitzen eingesetzt wird, wobei die Steuervorrichtung (11) derart ausgebildet ist, dass die elektromotorische Bremskraft und/oder die mechanische Bremskraft und/oder die Summe der elektromotorischen und mechanischen Bremskräfte einem Bremskraftwunsch entspricht oder möglichst nahe kommt.

10. Selbstfahrende Arbeitsmaschine nach einem der vorhergehenden Ansprüche, wobei die Steuervorrichtung (11) einen Retardregler zum Regeln der rückgespeisten Motorbremsleitung und/oder Regeln der Leistungsaufnahme des zumindest einen Hilfsaggregats (7) und/oder Regeln des Betriebszustands des Verbrennungsmotors (6) umfaßt.

11. Verfahren zum Abbremsen einer Arbeitsmaschine (1), insbesondere in Form eines Kettenfahrzeugs wie Planierraupe, die zumindest einen Elektroantrieb (3) umfassend zumindest einen Elektromotor (4), einen von einem Verbrennungsmotor (6) antreibbaren Generator (5) zum Stromversorgen des Elektroantriebs (3), zumindest ein mit dem Verbrennungsmotor (6) verbundenes Hilfsaggregat (7) in Form einer Hydraulikpumpe, welche für den Fahrbetrieb nicht benötigt wird und beim Fahren drucklos im Umlauf fördert oder auf Fördermenge Null geschwenkt ist sowie eine Bremsvorrichtung (10) zum Abbremsen der Arbeitsmaschine aufweist, wobei zum Bremsen der Arbeitsmaschine (1) der zumindest eine Elektromotor (4) als Generator betrieben und die dabei erzeugte elektrische Motorbremsleistung über eine Rückspeisevorrichtung (20) auf den Generator (5) rückgespeist, und die vom Generator (5) hierbei erzeugte. mechanische Antriebsleistung auf dem Verbrennungsmotor (6) abgestützt wird, **dadurch gekennzeichnet, dass** die Leistungsaufnahme der Hydraulikpumpe in Abhängigkeit der auf den Verbrennungsmotor (6) rückgespeisten, elektrischen Motorbremsleistung und/oder des Betriebszustands des mit rückgespeister Motorbremsleistung beaufschlagten Verbrennungsmotors (6) von einer Steuervorrichtung (11) automatisch verändert und von einem Regler derart geregelt wird, dass der Verbrennungsmotor (6) auf einer verminderten Drehzahl gehalten wird oder der vorbestimmten Drehzahl möglichst nahekommt..

12. Verfahren nach dem vorhergehenden Anspruch, wobei bei relativ geringem Bremskraftwunsch in einer ersten Bremsstufe bei im Wesentlichen gleichbleibender Drehzahl des Verbrennungsmotors (6) die Kraftstoffzufuhr an den Verbrennungsmotor (6) reduziert wird, bei weiter zunehmendem Bremskraftwunsch in einer zweiten Bremsstufe bei abgeschalteter Kraftstoffzufuhr der Verbrennungsmotor (6) unter Beaufschlagung der rückgespeisten Motorbremsleistung bis zum Erreichen einer vorbestimmten maximalen Drehzahl hochgedreht wird, und bei nochmals zunehmendem Bremskraftwunsch die Leistungsaufnahme des zumindest einen Hilfsaggregats (7) in einer dritten Bremsstufe erst dann erhöht wird, wenn der Verbrennungsmotor (6) die vorbestimmte maximale Drehzahl erreicht hat.

## Claims

1. A self-propelling work machine, in particular a tracked vehicle such as a bulldozer, having an electric drive (3) comprising at least one electric motor (4), having a generator (5) drivable by an internal combustion engine (6) and for supplying the electric drive (3) with electrical energy, and having at least one auxiliary unit (7), connected to the internal combustion engine, in the form of a hydraulic pump which is not required for the travel operation and conveys in idle circulation on driving or is swiveled to conveying a quantity of zero as well as having a braking apparatus (10) for braking the work machine, wherein the named braking apparatus (10) provides a regenerative braking by the electric drive (3) and comprises a feedback apparatus (20) for the feedback of electrical motor braking power of the electric motor (4) to the generator (5), wherein the motor braking power of the at least one electric motor (4) is transferred, at least up to the reaching of the retard capacity of the internal combustion engine (6) and of the at least one auxiliary unit (7), completely to the generator (5) connected to the internal combustion engine (6) and the mechanical drive power generated by the generator (5) is transferred completely to the internal combustion engine (6), **characterized in that** a control apparatus (11) is provided for the automatic increasing and/or decreasing of the power pickup of the hydraulic pump in dependence on the electrical motor braking power fed back to the internal combustion engine (6) and/or on the operating state of the internal combustion engine (6) acted on by fed back motor braking power, with the control apparatus (11) having a regulator for regulating the power pick-up of the hydraulic system such that the internal combustion engine (6) is maintained at a predefined speed or comes as close as possible to the predefined speed.

2. A self-propelling work machine in accordance with one of the preceding claims, wherein the control apparatus (11) comprises a first braking stage in which applying of the electric motor braking power on the internal combustion engine (6) takes place such that, in a first sub-stage, the fuel supply to the internal combustion engine (6) is first reduced with a substantially constant engine speed and, in a second sub-stage with a cut-off fuel supply, a speed increase of the internal combustion engine (6) is permitted for increasing the braking power until a predefined maximum speed is reached.

3. A self-propelling work machine in accordance with one of the preceding claims, wherein the control apparatus (11) is configured such that, on the regenerative braking, the fed back motor braking power is primarily applied on the internal combustion engine (6) and is only secondarily applied by increasing the power pick-up of the at least one auxiliary unit (7) when the motor braking power fed back to the internal combustion engine (6) reaches the retard capacity of the internal combustion engine (6).

4. A self-propelling work machine in accordance with one of the preceding claims, wherein the control apparatus (11) is connectable to speed detection means (16) for detecting a speed of the internal combustion engine (6) and is configured such that the power pick-up of the at least one auxiliary unit (7) is increased on exceeding a predefined speed of the internal combustion engine (6) and is reduced on falling below the/a predefined speed of the internal combustion engine (6).

5. A self-propelling work machine in accordance with the preceding claim, wherein the power pick-up of the hydraulic pump conveying in idle circulation when driving can be increased by the/a control apparatus (11) in that a flow resistance in circulation is successively increased, preferably by a pre-controllable pressure relief valve.

6. A self-propelling work machine in accordance with claim 7, wherein the power pick-up of the hydraulic pump swiveled to conveying a quantity of zero when driving can be increased by the/a control apparatus (11) in that the hydraulic pump is successively swiveled out against a preferably constant flow resistance in circulation, preferably against a fixedly set pressure relief valve.

7. A self-propelling work machine in accordance with one of the preceding claims, wherein the control apparatus (11) is connectable to engine control means (32) for controlling the fuel supply to the internal combustion engine (6), with the named engine control means (32) preferably being configured such that in braking operation with feedback of motor braking power to the internal combustion engine (6), the fuel supply is reduced such that the internal combustion engine (6) is maintained at a substantially constant speed.

8. A self-propelling work machine in accordance with one of the preceding claims, wherein the feedback apparatus (20) comprises at least one motor inverter (13) associated with the at least one electric motor (4) and at least one generator inverter (14) associated with the generator (5) as well as at least one intermediate circuit (15) provided between the motor inverter (13) and the generator inverter (14), in particular in the form of a DC voltage intermediate circuit.

9. A self-propelling work machine in accordance with one of the preceding claims, wherein the control apparatus (11) is configured such that primarily the regenerative braking and only secondarily a braking by an electrical braking resistor (15) and/or a mechanical brake takes place when the motor braking power fed back to the internal combustion engine (6) and to the at least one auxiliary unit (7) reaches the retard capacity of the internal combustion engine (6) and of the at least one auxiliary unit connected thereto, wherein the control apparatus (11) is configured such that the capacity of the electrical braking resistor (15) is exhausted before connecting the mechanical brake, wherein the control apparatus (11) is configured such that the electrical braking resistor (15) is only used briefly, preferably only for some seconds, for reducing braking power peaks, wherein the control apparatus (11) is configured such that the electric motor braking force and/or the mechanical braking force and/or the sum of the electric motor braking force and of the mechanical braking force corresponds or comes as close as possible to a desired braking force.

10. A self-propelling work machine in accordance with one of the preceding claims, wherein the control apparatus (11) comprises a retard regulator for regulating the fed back motor braking power and/or for regulating the power pick-up of the at least one auxiliary unit (7) and/or for regulating the operating state of the internal combustion engine (6).

11. A method for braking a work machine (1), in particular in the form of a tracked vehicle such as a bulldozer, which has at least one electric drive (3) comprising at least one electric motor (4), a generator (5) drivable by an internal combustion engine (6) for the power supply of the electric drive (3), at least one auxiliary unit (7), connected to the internal combustion engine (6), in the form of a hydraulic pump which is not required for the travel operation and conveys in idle circulation on driving or is swiveled to conveying a quantity of zero as well as a braking apparatus (10) for braking the work machine, wherein, for the braking of the work machine (1), the at least one electric motor (4) is operated as a generator and the electrical motor braking power generated in so doing is fed back to the generator (5) via a feedback apparatus (20) and the mechanical drive power generated in this respect by the generator (5) is applied on the internal combustion engine (6), **characterized in that** the power pick-up of the hydraulic pump is automatically varied by a control apparatus (11) in dependence on the electrical braking power fed back to the internal combustion engine (6) and/or on the operating state of the internal combustion engine (6) acted on by fed back motor braking power and is regulated by a regulator such that the internal combustion engine (6) is maintained at a reduced speed or comes as close as possible to the predefined speed

12. A method in accordance with the preceding claim, wherein with a relatively small desired braking force in a first braking stage with a substantially unchanging speed of the internal combustion engine (6), the fuel supply to the internal combustion engine (6) is reduced, with a further increasing desired braking force in a second braking stage with a cut-off fuel supply, the internal combustion engine (6) is revved up under the action of the fed back motor braking power up to the reaching of a predefined maximum speed, and with an again increasing desired braking force, the power pick-up of the at least one auxiliary unit (7) is only increased in a third braking stage when the internal combustion engine (6) has reached the predefined maximum speed.

## Revendications

1. Engin de travail automoteur, en particulier véhicule chenillé tel qu'un bulldozer, doté d'un entraînement électrique (3) comprenant au moins un moteur électrique (4), d'un générateur (5) pouvant être entraîné par un moteur à combustion interne (6) pour alimenter l'entraînement électrique (3) en énergie électrique, d'au moins un groupe auxiliaire (7), relié au moteur à combustion interne, sous la forme d'une pompe hydraulique, laquelle n'est pas nécessaire pour le fonctionnement en translation et, lors de la translation, refoule sans pression en circulation ou est basculée en quantité nulle de refoulement, ainsi que d'un dispositif de freinage (10) pour le freinage de l'engin de travail, ledit dispositif de freinage (10) prévoyant un freinage électrique par l'entraînement électrique (3) et comprenant un dispositif de réinjection (20) pour la réinjection de puissance électrique de freinage moteur du moteur électrique (4) au générateur (5), la puissance de freinage moteur de l'au moins un moteur électrique (4) étant transmise en totalité, au moins jusqu'à ce que la capacité de décélération du moteur à combustion interne (6) et de l'au moins un groupe auxiliaire (7) soit atteinte, au générateur (5) relié au moteur à combustion interne (6) et la puissance d'entraînement mécanique générée par le générateur (5) étant transmise en totalité au moteur à combustion interne (6), **caractérisé en ce qu'**un dispositif de commande (11) est prévu pour l'augmentation et/ou la diminution automatique de la puissance absorbée de la pompe hydraulique en fonction de la puissance électrique de freinage moteur réinjectée dans le moteur à combustion interne (6) et/ou de l'état de fonctionnement du moteur à combustion interne (6) alimenté en puissance de freinage moteur réinjectée, le dispositif de commande (11) comportant un régulateur pour réguler la puissance absorbée de l'hydraulique de telle manière que le moteur à combustion interne (6) est maintenu à une vitesse prédéfinie ou s'approche le plus possible de la vitesse prédéfinie.

2. Engin de travail automoteur selon l'une des revendications précédentes, dans lequel le dispositif de commande (11) comprend un premier palier de freinage, dans lequel le support de la puissance électrique de freinage moteur par le moteur à combustion interne (6) est effectué de telle manière que, dans un premier sous-palier, l'alimentation en carburant du moteur à combustion interne (6) est d'abord réduite avec une vitesse du moteur sensiblement constante et, dans un second sous-palier, une augmentation de la vitesse du moteur à combustion interne (6) est autorisée pour augmenter la puissance de freinage lorsque l'alimentation en carburant est désactivée, jusqu'à ce qu'une vitesse maximale prédéfinie soit atteinte.

3. Engin de travail automoteur selon l'une des revendications précédentes, dans lequel le dispositif de commande (11) est conçu de telle manière que, lors du freinage électrique, la puissance de freinage moteur réinjectée est supportée prioritairement par le moteur à combustion interne (6) et uniquement de manière secondaire par l'augmentation de la puissance absorbée de l'au moins un groupe auxiliaire (7) quand la puissance de freinage moteur réinjectée dans le moteur à combustion interne (6) atteint la capacité de décélération du moteur à combustion interne (6).

4. Engin de travail automoteur selon l'une des revendications précédentes, dans lequel le dispositif de commande (11) peut être relié à des moyens de détection de vitesse (16) pour détecter une vitesse du moteur à combustion interne (6) et est conçu de telle manière que la puissance absorbée de l'au moins un groupe auxiliaire (7) est augmentée en cas de dépassement d'une vitesse prédéfinie du moteur à combustion interne (6) et diminuée lorsque la/une vitesse prédéfinie du moteur à combustion interne (6) n'est pas atteinte.

5. Engin de travail automoteur selon la revendication précédente, dans lequel la puissance absorbée de la pompe hydraulique refoulant sans pression en circulation lors de la translation peut être augmentée par le/un dispositif de commande (11) par le fait qu'une résistance à l'écoulement est augmentée successivement en circulation, de préférence par une soupape de limitation de pression à commande pilote.

6. Engin de travail automoteur selon la revendication 7, dans lequel la puissance absorbée de la pompe hydraulique basculée en quantité nulle de refoulement lors de la translation peut être augmentée par le/un dispositif de commande (11) par le fait que la pompe hydraulique est successivement basculée en circulation contre une résistance à l'écoulement de préférence constante, de préférence contre une soupape de limitation de pression réglée de manière fixe.

7. Engin de travail automoteur selon l'une des revendications précédentes, dans lequel le dispositif de commande (11) peut être relié à des moyens de commande moteur (32) pour commander l'alimentation en carburant du moteur à combustion interne (6), lesdits moyens de commande moteur (32) étant de préférence conçus de telle manière que, en mode de freinage avec réinjection de puissance de freinage moteur dans le moteur à combustion interne (6), l'alimentation en carburant est réduite de telle manière que le moteur à combustion interne (6) est maintenu à une vitesse sensiblement constante.

8. Engin de travail automoteur selon l'une des revendications précédentes, dans lequel le dispositif de réinjection (20) comprend au moins un convertisseur de moteur (13) associé à l'au moins un moteur électrique (4) et au moins un convertisseur de générateur (14) associé au générateur (5), ainsi qu'au moins un circuit intermédiaire prévu entre le convertisseur de moteur (13) et le convertisseur de générateur (14), en particulier sous la forme d'un circuit intermédiaire de tension continue.

9. Engin de travail automoteur selon l'une des revendications précédentes, dans lequel le dispositif de commande (11) est conçu de telle manière que le freinage électrique est effectué prioritairement et un freinage par une résistance de freinage électrique (15) et/ou un frein mécanique est effectué uniquement de manière secondaire, quand la puissance de freinage moteur réinjectée dans le moteur à combustion interne (6) et l'au moins un groupe auxiliaire (7) atteint la capacité de décélération du moteur à combustion interne (6) et de l'au moins un groupe auxiliaire relié à celui-ci, le dispositif de commande (11) étant conçu de telle manière que, avant la commutation du frein mécanique, la capacité de la résistance de freinage électrique (15) est épuisée, le dispositif de commande (11) étant conçu de telle manière que la résistance de freinage électrique (15) est utilisée uniquement brièvement, de préférence uniquement quelques secondes, pour supprimer des pointes de puissance de freinage, le dispositif de commande (11) étant conçu de telle manière que la force de freinage électromotrice et/ou la force de freinage mécanique et/ou la somme des forces de freinage électromotrice et mécanique correspond à ou s'approche le plus possible d'une force de freinage souhaitée.

10. Engin de travail automoteur selon l'une des revendications précédentes, dans lequel le dispositif de commande (11) comprend un régulateur de ralentissement pour réguler la puissance de freinage moteur réinjectée et/ou réguler la puissance absorbée de l'au moins un groupe auxiliaire (7) et/ou réguler l'état de fonctionnement du moteur à combustion interne (6).

11. Procédé de freinage d'un engin de travail (1), en particulier sous la forme d'un véhicule chenillé tel qu'un bulldozer, qui comporte au moins un entraînement électrique (3) comprenant au moins un moteur électrique (4), un générateur (5) pouvant être entraîné par un moteur à combustion interne (6) pour alimenter en courant l'entraînement électrique (3), au moins un groupe auxiliaire (7), relié au moteur à combustion interne (6), sous la forme d'une pompe hydraulique, laquelle n'est pas nécessaire pour le fonctionnement en translation et, lors de la translation, refoule sans pression en circulation ou est basculée sur une quantité nulle de refoulement, ainsi qu'un dispositif de freinage (10) pour le freinage de l'engin de travail, l'au moins un moteur électrique (4) étant exploité comme générateur pour le freinage de l'engin de travail (1) et réinjectant la puissance électrique de freinage moteur ainsi générée dans le générateur (5) par le biais d'un dispositif de réinjection (20), et la puissance d'entraînement mécanique ainsi générée par le générateur (5) étant supportée par le moteur à combustion interne (6), **caractérisé en ce que** la puissance absorbée de la pompe hydraulique est automatiquement modifiée par un dispositif de commande (11) en fonction de la puissance électrique de freinage moteur réinjectée dans le moteur à combustion interne (6) et/ou de l'état de fonctionnement du moteur à combustion interne (6) alimenté en puissance de freinage moteur réinjectée et est régulée par un régulateur de telle manière que le moteur à combustion interne (6) est maintenu à une vitesse réduite ou s'approche le plus possible de la vitesse prédéfinie.

12. Procédé selon la revendication précédente, dans lequel, si la force de freinage souhaitée est relativement faible, l'alimentation en carburant du moteur à combustion interne (6) est réduite dans un premier palier de freinage avec une vitesse sensiblement constante du moteur à combustion interne (6), si la force de freinage souhaitée augmente, le moteur à combustion interne (6) est accéléré dans un second palier de freinage, avec l'alimentation en carburant désactivée, en alimentant la puissance de freinage moteur réinjectée jusqu'à ce qu'une vitesse maximale prédéfinie soit atteinte, et si la force de freinage souhaitée augmente encore, la puissance absorbée de l'au moins un groupe auxiliaire (7) est augmentée dans un troisième palier de freinage uniquement quand le moteur à combustion interne (6) a atteint la vitesse maximale prédéfinie.
